# EUROPÄISCHE PATENTSCHRIFT

(11) **EP 1 860 365 B1**
(45) Veröffentlichungstag und Bekanntmachung des Hinweises auf die Patenterteilung: **08.07.2009**
(21) Anmeldenummer: 07010131.6
(22) Anmeldetag: 22.05.2007
(51) Int. Cl.: F16M 11/16

(54) **Zusammenklappbarer Ständer**
Foldable stand
Support repliable

(30) Priorität: 26.05.2006 DE 202006008531 U; 12.06.2006 DE 202006009316 U
(43) Veröffentlichungstag der Anmeldung: 28.11.2007
(73) Patentinhaber: Wulle, Hermann, 71543 Wüstenrot (DE)
(72) Erfinder: Wulle, Hermann, 71543 Wüstenrot (DE)
(74) Vertreter: Müller, Hans

(56) Entgegenhaltungen:
- DE-U1- 20 003 564
- GB-A- 197 801

## Beschreibung

### TECHNICHES GEBIET

Die Erfindung betrifft einen zusammenklappbaren Ständer. Der Ständer besitzt eine standfeste Grundplatte, auf der Gegenstände wie beispielsweise ein Vogelhäuschen aufgelagert werden können. Um die Zugänglichkeit zu dem auf der Grundplatte beispielsweise platzierten Vogelhäuschen komfortabel zu gestalten, sind derartige Ständer etwa 80 Zentimeter bis 180 Zentimeter hoch.

### STAND DER TECHNIK

Aus der DE 200 03 564 U1 ist ein derartiger zusammenklappbarer Ständer mit drei klappbaren Standbeinen bekannt. Die Stirnfläche eines jeden Standbeins besitzt zwei winklig zueinander ausgerichtete Oberflächenbereiche. Dadurch kann die Stirnfläche des betreffenden Standbeins mit einem ihrer beiden Oberflächenbereiche im eingeklappten und mit dem anderen Oberflächenbereich im ausgeklappten Zustand jeweils von unten an der Grundplatte anliegen. Die gelenkige Verbindung zwischen Grundplatte und Standbein wird dadurch hergestellt, dass ein stiftförmiges Verbindungsmittel wie beispielsweise eine das Standbein an der Grundplatte festhaltende Schraube in einem Loch in der Grundplatte gehalten wird. Das Loch ist so geformt, dass das stiftförmige Verbindungsmittel beim Hin- und Herschwenken des Standbeins ausreichend Freiraum in dem Loch der Grundplatte findet. Diese Konstruktion für zusammenklappbare Ständer hat sich bewährt. Das Zurechtsägen der Stirnseiten eines jeden Standbeins zum Herstellen der leicht dachförmig abgeschrägten beiden Oberflächenbereiche stellt einen relativ beträchtlichen Aufwand dar. Die praktisch nicht vorhandene Führung des Verbindungsmittels in der relativ dünnen Grundplatte macht es erforderlich, die ausgeklappte Position der drei Standbeine durch eine die Beine aneinander haltende Verstrebung zu sichern. Neben dem wirtschaftlichen Mehraufwand für die Bereitstellung der für die Verstrebungen erforderlichen Beschläge stellt das Anbringen dieser Verstrebung auch einen zusätzlichen Aufwand beim Aufstellen eines solchen Ständers dar.

Bei dem aus der GB 197,801 A bekannten Stativ ist am oberen Ende eines jeden Stativfußes ein sich verjüngender, einen zentral herausstehenden, federbelasteten Stift besitzender Einsatz vorhanden. Der Stift ist in einem einen zum freien Verschwenken des betreffenden Stativfußes ausreichend großen Freiraum besitzenden Loch in der von den Stativbeinen getragenen Grundplatte gehalten. Nachteilig ist auch hier der am Kopf eines jeden Stativfußes erforderliche Konstruktions- und Bearbeitungsaufwand.

### DARSTELLUNG DER ERFINDUNG

Ausgehend von diesem Stand der Technik liegt der Erfindung die Aufgabe zugrunde, einen möglichst preiswerten und leicht zu handhabenden Ständer der eingangs genannten Art anzugeben.

Diese Erfindung ist durch die Merkmale des Hauptanspruchs gegeben. Sinnvolle Weiterbildungen der Erfindung sind Gegenstand von sich daran anschließenden weiteren Ansprüchen.

Der erfindungsgemäße Ständer hat den Vorteil, dass seine Standbeine eine ebenflächige Stirnfläche besitzen können, da die für das Ein- und Ausklappen erforderlichen schrägen Flächen auf der Unterseite der Grundplatte ausgebildet werden können. Sofern die Grundplatte in ihrer entsprechenden Ausbildung als Fertigteil hergestellt wird, können dann die beispielsweise drei Standbeine mit ihren ebenflächigen Stirnflächen einfach und schnell an der Grundplatte befestigt wie insbesondere angeschraubt werden.

Die Führung des Verbindungsmittels wie insbesondere der als solches verwendeten Schraube in der Grundplatte kann so ausgebildet werden, dass das Verbindungsmittel bei seinen Klapp- beziehungsweise Schwenkbewegungen zwischen zwei Rastpositionen hin- und her verschwenkbar ist. Die eine Rastposition stellt dann den eingeklappten Zustand der Standbeine und die andere Rastposition den ausgeklappten Zustand dieser Standbeine dar.

Die Rastpositionen können durch einen elastisch verformbaren Einsatzkörper hergestellt werden, der ein Loch besitzt, durch das das stiftförmige Verbindungsmittel wie beispielsweise eine Schraube entsprechend verschenkbar hindurchgeführt werden kann. Der Einsatzkörper beziehungsweise die Wandung des in ihm vorhandenen Loches kann so flächenmäßig so groß sein, dass eine stabile Führung der beispielsweise Schraube in dem Loch vorhanden ist, so dass auf eine Verstrebung der Standbeine in ihrem ausgeklappten Zustand verzichtet werden kann. Zum Aufstellen eines solchen Ständers brauchen dann seine Standbeine nur noch ausgeklappt zu werden; ein zusätzliches Aussteifen der Standbeine, wie es im Stand der Technik erforderlich ist, kann entbehrlich sein.

Die elastische Ausbildung des Einsatzkörpers kann dadurch verwirklicht werden, dass die Lochwandung mit seitlichem Spiel in der Grundplatte befestigt ist. Die Wandung kann also im Bereich der Querschnittsverjüngung, durch die ein Hin- und Herverrasten des stiftförmigen Verbindungsmittels ermöglicht werden kann, auseinander gedrückt werden.

Es hat sich herausgestellt, dass eine solche Grundplatte mit angeformten Anschlussbereichen für die Einsatzkörper zum Befestigen der mehreren Standbeine als wirtschaftlich günstig biegesteifes Kunststoffteil hergestellt werden kann. Ein solches Kunststoffteil kann dann als ein Spritzgußteil hergestellt sein. Die elastisch verformbaren Einsatzkörper können dann beispielsweise reibschlüssig oder auf andere Weise ausreichend fest in der Grundplatte eingesetzt sein.

Es ist möglich, den Anschlussbereich im Bereich der Grundplatte mit seinen beiden dachförmig zueinander ausgerichteten beiden Oberflächenbereichen als einen zur Grundplatte separaten Anschlusskörper auszubilden. Dieser Anschlusskörper kann dann als selbständig handelbares Bauteil an eine - beispielsweise auch aus Holzmaterial bestehende - Grundplatte befestigt wie beispielsweise angeschraubt werden. Dabei können auch die für einen zusammenklappbaren Ständer erforderlichen mehreren Anschlussbereiche zu einem vergleichbaren einzigen Anschlusskörper zusammengefasst sein. An einen solchen Anschlusskörper können dann die einen oder die mehreren Standbeine angeschraubt werden. Die für den erfindungsgemäßen zusammenklappbaren Ständer erforderlichen, relativ kompliziert herzustellenden dachartigen Berührungsflächen zwischen Standbein und Grundkörper können also in dem Anschlussbereich beziehungsweise in dem Anschlusskörper als Spritzgußteil sehr einfach bereitgestellt werden. Die Standbeine können lediglich ebenflächige Stirnflächen haben, die durch Ablängen entsprechender Latten oder Holzstämme oder anderer stabförmiger Glieder sehr einfach kostengünstig hergestellt werden können. Die Standbeine können also beispielsweise durch einfaches Ablängen aus langen Materialstangen vollständig hergestellt werden.

Weitere Merkmale und Vorteile der Erfindung sind den in den Ansprüchen ferner angegebenen Merkmalen sowie dem nachfolgenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: eine perspektivische Ansicht eines zusammenklappbaren Ständers nach der Erfindung, im ausgeklappten Zustand,
- Fig. 2: eine Darstellung des Ständers gemäß Fig. 1, im eingeklappten Zustand,
- Fig. 3: eine vergrößerte Darstellung des Anschlussbereiches zwischen einem Standbein und der Grundplatte des Ständers im ausgeklappten Zustand,
- Fig. 4: eine Darstellung des Ständers gemäß Fig. 3 im eingeklappten Zustand und
- Fig. 5: eine perspektivische Untersicht der Grundplatte mit an ihr teilweise angeschraubtem einen Standbein in dessen ausgeklappter Stellung.

### WEGE ZUM AUSFÜHREN DER ERFINDUNG

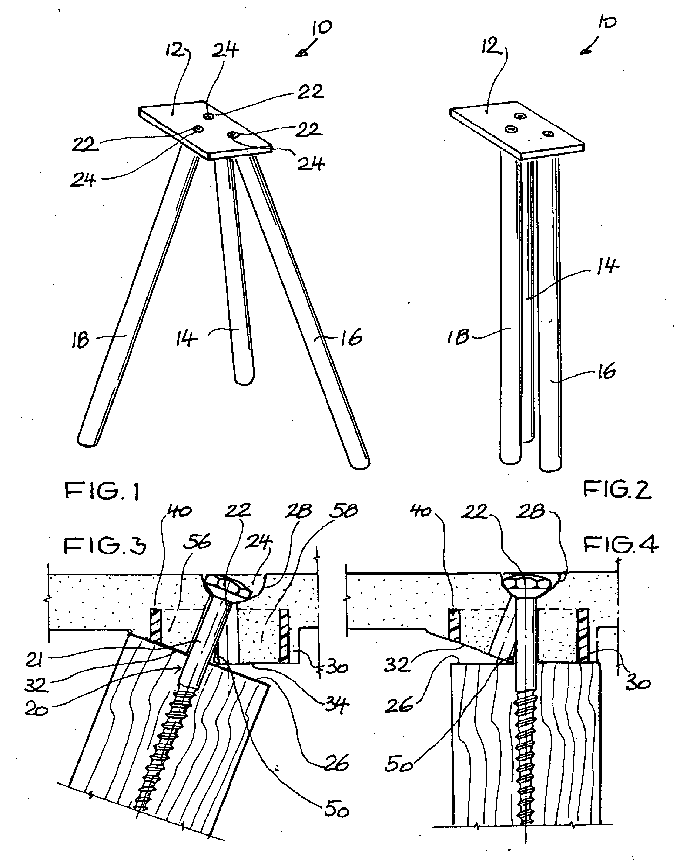

Ein zusammenklappbarer Ständer 10 besitzt eine Grundplatte 12, die im vorliegenden Fall eine etwa rechteckige Form mit ebener Oberfläche hat. Ihre Unterfläche ist strukturiert wie aus den Figuren 3, 4 und 5 zu erkennen ist.

An der Grundplatte 12 sind im vorliegenden Beispielsfall drei Standbeine 14, 16, 18 klapp- beziehungsweise schwenkbar angeordnet. Die drei Standbeine 14, 16, 18 können aus ihrer in Fig. 1 dargestellten ausgeklappten Stellung in die in Fig. 2 dargestellte eingeklappte Stellung geklappt beziehungsweise geschwenkt werden, und umgekehrt.

Auf der Grundplatte 12 kann beispielsweise ein Vogelhäuschen aufgesetzt werden, was in der Zeichnung nicht dargestellt ist. Kleinere Vogelhäuschen könnten lose auf der Grundplatte 12 platziert werden. Größere und schwerere Vogelhäuschen können auf der Grundplatte 12 befestigt wie beispielsweise angeschraubt oder angenagelt werden. Der entsprechend betriebsfertige, ausgeklappte Zustand des Ständers 10 ist in Fig. 1 dargestellt.

Gegenüber dem in Fig. 1 dargestellten betriebsfertigen Zustand des Ständers 10, stellt der in Fig. 2 dargestellte Zustand den Transportzustand des Ständers dar. In diesem eingeklappten Zustand sind seine drei Standbeine 14, 16, 18 etwa parallel zueinander ausgerichtet. Dieser eingeklappte Zustand und auch der ausgeklappte Zustand der drei Standbeine wird durch eine Verrastung der Standbeine in ihrem eingeklappten oder ausgeklappten Zustand ermöglicht, was noch nachstehend näher beschrieben wird. Die drei Standbeine 14, 16, 18 sind dabei jeweils mit einer Schraube 20, von denen in Fig. 1 und 2 ihr Schraubenkopf 22 in dem in der Grundplatte 12 vorhandenen Loch 24 erkennbar ist, gelenkig befestigt. Die betreffende Schraube 20 wird durch die Stirnfläche 26 des betreffenden Standbeins in dasselbe eingeschraubt. Der Schraubenkopf 22 liegt dabei in einer Vertiefung 28 des jeweiligen Loches 24.

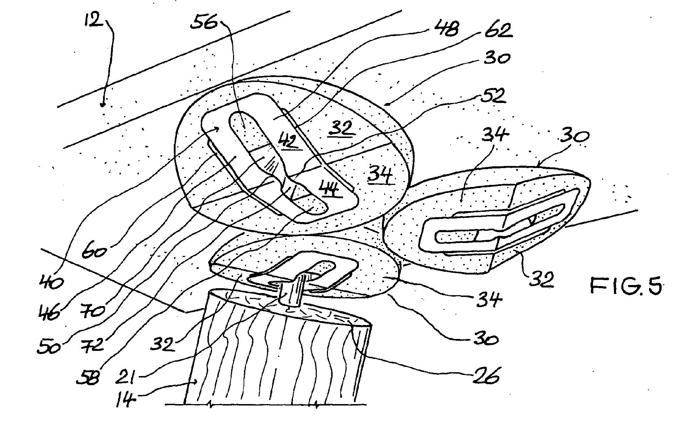

Die Unterseite der Grundplatte 12 weist eine Materialverstärkung 30 in Form eines kreiszylindrischen Vorsprunges auf (Fig. 5). In dieser Materialverstärkung 30, die im Bereich einer jeden Stirnfläche 26 eines Standbeines 14, 16, 18 vorhanden ist, ist ein Einsatzkörper 40 aus elastischem Material eingesetzt. Die Unterseite der Materialverstärkung 30 und auch die Unterseite des bündig in der Materialverstärkung 30 einsetzenden Einsatzkörpers 40 besitzt einen ersten Oberflächenbereich 32 beziehungsweise 42 und einen zweiten Oberflächenbereich 34 beziehungsweise 44. Der Oberflächenbereich 32 der Materialverstärkung 30 und der erste Oberflächenbereich 42 eines Einsatzkörpers 40 fluchten miteinander. Ebenfalls fluchten miteinander der zweite Oberflächenbereich 34 der Materialverstärkung 30 und der zweite Oberflächenbereich 44 des Einsatzkörpers 40. Diese beiden Oberflächenbereiche 32, 34 beziehungsweise 42, 44 sind winklig zueinander ausgerichtet (Fig. 3, 4). Die gegenseitige dachförmige Ausrichtung dieser beiden Oberflächenbereiche 32, 34 beziehungsweise 42, 44 definiert das Maß, mit dem die drei Standbeine 14, 16, 18 aus ihrer in Fig. 4 gezeigten eingeklappten Stellung in ihre in Fig. 3 dargestellten ausgeklappten Stellung verschwenkt werden können.

Der Einsatzkörper 40 besitzt eine hülsenförmige Gestalt mit einer etwa ausgerundeten rechteckigen Grundrissform. Seine beiden Längswände 46, 48 besitzen eine mittige, im Innenraum des Einsatzkörpers 40 jeweils einspringende Ausformung 50 beziehungsweise 52. Dadurch wird der freie Querschnitt im Inneren des Einsatzkörpers 40 in dem Bereich der Ausformung 50, 52 eingeschnürt. Im Bereich der schmalen Endseiten des Einsatzkörpers 40 (Fig. 5) kragt mit einem jeweiligen Kragteil 56, 58 materialmäßig die Grundplatte zungenförmig in den Innenraum des Einsatzkörpers 40 hinein. Dieses Kragteile 56, 58 halten den Einsatzkörper 40 in der Materialverstärkung 30. Seitlich außerhalb der klemmend beziehungsweise reibschlüssig beiden Längswände 46, 48 ist ein Materialspalt 60 beziehungsweise 62 zwischen der jeweiligen Längswand 46, 48 und der Materialverstärkung 30 vorhanden. Dadurch können beide Längswände 46, 48 in ihrem mittleren Bereich, das heißt im Bereich ihrer Ausformungen 50, 52, sich jeweils nach außen elastisch verformen. Diese elastische Verformung ist erforderlich, damit der Schraubenschaft 21, der durch das Loch 24 und dem Einsatzkörper 40 hindurch geführt und durch die Stirnfläche 26 eines jeden Standbeines hinein geschraubte Schraube 20 zwischen den Ausformungen 50, 52 hindurch gedrückt werden kann. Beidseitig der Ausformungen 50, 52 ist der Freiraum im Inneren des Einsatzkörpers 40 zur Aufnahme des Schraubenschaftes 21 größenmäßig ausgelegt. Im Lochbereich 70 des Einsatzkörpers 40, der im ersten Oberflächenbereich 42 des Einsatzkörpers 40 und damit auch im ersten Oberflächenbereich 32 der Materialverstärkung 30 liegt, befindet sich der Schraubenschaft 21 und damit die Schraube 20 im ausausgeklappten Zustand des betreffenden Standbeines. In dem auf der anderen Seite der Ausformungen 50, 52 vorhandenen Lochbereich 72 befindet sich der Schraubenschaft 21 dagegen im eingeklappten Zustand des betreffenden Standbeines. Der Schraubenschaft 21 und damit die Schraube 20 rastet also einerseits im Lochbereich 70 und andererseits im Lochbereich 72 ein und kann zwischen den beiden Raststellungen hin und her verschwenkt werden.

Bei dem Verschwenken des betreffenden Standbeines liegt dessen Stirnfläche 26 mit einem Teilbereich flächig an dem ersten Oberflächenbereich 32 der Materialverstärkung 30 und gleichzeitig an dem ersten Oberflächenbereich 42 des Einsatzkörpers 40 an. Vergleichsweises gilt für den eingeklappten Zustand des betreffenden Standbeines, an der die Stirnfläche 26 mit einem anderen Teilbereich ihrer Stirnfläche 26 an dem zweiten Oberflächenbereich 34 der Materialsverstärkung 30 und dem zweiten Oberflächenbereich 44 des Einsatzkörpers 40 pressend anliegt.

Es ist möglich, die Stirnfläche 26 mit einer reibfesten Verkleidung zu versehen, so dass die Stirnfläche 26 nicht unmittelbar sondern mittelbar an den ersten und zweiten Oberflächenbereichen der Grundplatte 12 jeweils anliegt. Eine solche Auskleidung oder Verkleidung könnte beispielsweise eine auf die Stirnfläche 26 aufgelegte Ringscheibe sein.

Die vorliegende Grundplatte und ihre drei Materialsverstärkungen 30 bestehen im vorliegenden Beispielsfall aus Kunststoff. Diese eine strukturierte Unterseite aufweisende Grundplatte 12 ist als Spritzgussteil hergestellt. Die in ihrer Materialverstärkung eingesetzten drei Einsatzkörper 40 bestehen aus elastisch verformbarem, frostsicherem, hitzebeständigem und verschleißfestem Kunststoffmaterial.

Die den Anschlussbereich der drei Standbeine darstellenden Materialverstärkungen 30 können auch einzeln oder insgesamt Teil eines separaten Anschlusskörpers sein. Ein solcher beispielsweise alle drei Materialsverstärkungen 30 enthaltener Anschlusskörper könnte dann an eine eine ebene Unterseite aufweisende Grundplatte befestigt wie beispielsweise angeschraubt werden. Ein solcher Anschlusskörper könnte dann einen separaten Handelsgegenstand darstellen.

## Patentansprüche

1. Zusammenklappbarer Ständer (10),
- mit einer Grundplatte (12) zum Auflagern von Gegenständen wie beispielsweise von einem Vogelhäuschen,
- mit mehreren Standbeinen (14, 16, 18), die mit ihrem oberen Ende scharnierartig ein- und ausklappbar an der Grundplatte (12) befestigbar sind,
- mit zumindest einem stiftförmigen Verbindungsmittel (20), welches durch ein Loch (24) in der Grundplatte (12) hindurch und durch die Stirnfläche (26) eines Standbeines (14, 16, 18) hindurch fest in dem Standbein (14, 16, 18) einsetzbar ist,
- wobei dieses Loch (24) so ausgebildet ist, dass das Ein- und Ausklappen eines Standbeins bei unveränderter Ausrichtung der Grundplatte möglich ist,
- wobei
- die einem Standbein (14, 16, 18) benachbarte Unterseite der Grundplatte (12) einen Anschlussbereich mit einem ersten und zweiten Oberflächenbereich (32, 34) besitzt,
- der erste Oberflächenbereich (32) nur im ausgeklappten Zustand dieses Standbeins, dagegen nicht im eingeklappten Zustand; drückend an diesem Standbein anliegt,
- der zweite Oberflächenbereich (34) nur im eingeklappten Zustand dieses Standbeins, dagegen nicht im ausgeklappten Zustand, drückend an diesem Standbein anliegt,
- **dadurch gekennzeichnet, dass**
- das Loch (24) in einem elastisch verformbaren, an der Grundplatte fest anbringbaren Einsatzkörper (40) vorhanden ist,
- die einem Standbein benachbarte Unterseite des Einsatzkörpers (40) den ersten und zweiten Oberflächenbereich (42, 44) eines Anschlussbereiches besitzt.

2. Ständer nach Anspruch 1,
- **dadurch gekennzeichnet, dass**
- das stiftförmige Verbindungsmittel eine Schraube (20) ist.

3. Ständer nach Anspruch 1 oder 2,
- **dadurch gekennzeichnet, dass**
- das Loch (24) in der Grundplatte (12) so vorhanden ist, dass das Verbindungsmittel (20) mit seinem einen Ende versenkt in der Grundplatte (12) vorhanden ist.

4. Ständer nach einem der vorstehenden Ansprüche,
- **dadurch gekennzeichnet, dass**
- das Loch (24) eine elastisch verformbare Querschnittsverjüngung (50, 52) derart besitzt, dass das durch das Loch (24) hindurchgeführte Verbindungsmittel (20) zwischen beidseitig der Verjüngung (50,52) im Loch ausgebildeten Rastpositionen hin und her verschwenkbar ist.

5. Ständer nach Anspruch 4,
- **dadurch gekennzeichnet, dass**
- die Wandung (46, 48) des Einsatzkörpers (40) im Bereich der Querschnittsverjüngung (50, 52) des Loches (24) elastisch verformbar ist.

6. Ständer nach Anspruch 5,
- **dadurch gekennzeichnet, dass**
- die Wandung (46, 48) des Einsatzkörpers (40) im Bereich der Querschnittsverjüngung (50,52) des Loches (24) auseinander drückbar ist.

7. Ständer nach Anspruch 6,
- **dadurch gekennzeichnet, dass**
- ein Freiraum (60, 62) zwischen dem Einsatzkörper (40) und der Grundplatte (12) im Bereich der Querschnittsverjüngung (50, 52) des Loches (24) vorhanden ist.

8. Ständer nach einem der vorstehenden Ansprüche,
- **dadurch gekennzeichnet, dass**
- die Grundplatte (12) ein biegesteifes Kunststoffteil ist.

9. Ständer nach einem der vorstehenden Ansprüche,
- **dadurch gekennzeichnet, dass**
- die an die Grundplatte (12) fest anbringbaren mehreren Einsatzkörper (40) aus elastisch verformbarem Kunststoff bestehen.

10. Ständer nach einem der vorstehenden Ansprüche,
- **dadurch gekennzeichnet, dass**
- die Grundplatte (12) ein Kunststoff-Spritzgussteil ist.

11. Ständer nach einem der vorstehenden Ansprüche,
- **dadurch gekennzeichnet, dass**
- ein Einsatzkörper (40) versenkt in der Grundplatte (12) einsetzbar ist.

12. Ständer nach einem der vorstehenden Ansprüche,
- **dadurch gekennzeichnet, dass**
- ein Einsatzkörper (40) zumindest teilweise reibschlüssig versenkt in der Grundplatte (12) einsetzbar ist.

13. Ständer nach einem der vorstehenden Ansprüche,
- **dadurch gekennzeichnet, dass**
- zumindest ein Anschlussbereich mit seinem ersten und zweiten Oberflächenbereich (32, 34) einteiliger Bestandteil der Grundplatte (12) ist.

14. Ständer nach einem der vorstehenden Ansprüche,
- **dadurch gekennzeichnet, dass**
- zumindest ein Anschlussbereich mit seinem ersten und zweiten Oberflächenbereich (32, 34) einen Anschlusskörper bildet, der einerseits an einer Grundplatte und andererseits an einem Standbein befestigbar ist.

## Claims

1. Collapsible stand (10),
- having a baseplate (1-2) for supporting articles, for example a bird box,
- having a plurality of legs (14, 16, 18) which can be fastened on the baseplate (12) in a hinge-like manner at their top ends such that they can be swung in and out,
- having at least one pin-like connecting means (20) which can be inserted through a hole (24) in the baseplate (12), and through the end surface (26) of a leg (14, 16, 18), and fixed in the leg (14, 16, 18),
- wherein this hole (24) is designed such that a leg can be swung in and out while maintaining the orientation of the baseplate,
- wherein
- the underside of the baseplate (12), this underside being adjacent to a leg (14, 16, 18), has an attachment region with a first and second surface region (32, 34),
- the first surface region (32) presses against this leg only in the swung-out state of this leg, but not in its swung-in state,
- the second surface region (34) presses against this leg only in the swung-in state of this leg, but not in its swung-out state,
- **characterized in that**
- the hole (24) is provided in an elastically deformable insert body (40) which can be fixed to the baseplate,
- the underside of the insert body (40), this underside being adjacent to a leg, contains the first and second surface regions (42, 44) of an attachment region.

2. Stand according to Claim 1,
- **characterized in that**
- the pin-like connecting means is a screw (20).

3. Stand according to Claim 1 or 2,
- **characterized in that**
- the hole (24) is provided in the baseplate (12) such that the connecting means (20) has its one end recessed in the baseplate (12).

4. Stand according to one of the preceding claims,
- **characterized in that**
- the hole (24) has an elastically deformable cross-sectional tapering (50, 52) such that the connecting means (20) guided through the hole (24) can be pivoted back and forth between latching positions formed in the hole on either side of the tapering (50, 52).

5. Stand according to Claim 4,
- **characterized in that**
- the wall (46, 48) of the insert body (40) can be elastically deformed in the region of the cross-sectional tapering (50, 52) of the hole (24).

6. Stand according to Claim 5,
- **characterized in that**
- the walls (46, 48) of the insert body (40) can be forced apart from one another in the region of the cross-sectional tapering (50, 52) of the hole (24).

7. Stand according to Claim 6,
- **characterized in that**
- there is a free space (60, 62) present between the insert body (40) and the baseplate (12) in the region of the cross-sectional tapering (50, 52) of the hole (24).

8. Stand according to one of the preceding claims,
- **characterized in that**
- the baseplate (12) is a flexurally rigid plastics-material part.

9. Stand according to one of the preceding claims,
- **characterized in that**
- the plurality of insert bodies (40), which can be fixed to the baseplate (12), consist of elastically deformable plastics material.

10. Stand according to one of the preceding claims,
- **characterized in that**
- the baseplate (12) is a plastics-material injection moulding.

11. Stand according to one of the preceding claims,
- **characterized in that**
- an insert body (40) can be inserted into the baseplate (12) so as to be recessed therein.

12. Stand according to one of the preceding claims,
- **characterized in that**
- an insert body (40) can be inserted into the baseplate (12) so as to be recessed therein with at least partial frictional locking.

13. Stand according to one of the preceding claims,
- **characterized in that**
- at least one attachment region with its first and second surface regions (32, 34) is an integral constituent part of the baseplate (12).

14. Stand according to one of the preceding claims,
- **characterized in that**
- at least one attachment region with its first and second surface regions (32, 34) forms an attachment body which can be fastened, on the one hand, on a baseplate and, on the other hand, on a leg.

## Revendications

1. Support repliable (10),
- avec un socle (12) pour poser des objets comme par exemple une cage à oiseaux,
- avec plusieurs pieds d'appui (14, 16, 18) qui, par leur extrémité supérieure, peuvent être fixés sur le socle (12) de façon rabattable et déployable, à la manière d'une charnière,
- avec au moins un moyen de liaison (20) en forme de tige, qui, en traversant un trou (24) dans le socle (12) et en traversant la face frontale (26) d'un pied d'appui (14, 16, 18), peut être inséré fixement dans le pied d'appui (14, 16, 18),
- sachant que ce trou (24) est conçu de telle sorte qu'un pied d'appui peut être rabattu et déployé sans modification de l'orientation du socle,
- sachant
- que la face inférieure dù socle (12), possède, au voisinage d'un pied d'appui (14, 16, 18), une zone de raccordement avec une première région de surface et une deuxième région de surface (32, 34),
- que la première région de surface (32) s'applique avec pression contre ce pied d'appui uniquement dans l'état déployé de ce pied d'appui, mais non dans l'état rabattu,
- que la deuxième région de surface (34) s'applique avec pression contre ce pied d'appui uniquement dans l'état rabattu de ce pied d'appui, mais non dans l'état déployé,
**caractérisé en ce que**
- le trou (24) est ménagé dans un corps d'insertion (40) élastiquement déformable, qui peut fixement installé sur le socle,
- la face inférieure du corps d'insertion (40), voisine d'un pied d'appui, possède la première région de surface (42) et la deuxième région de surface (44) d'une zone de raccordement.

2. Support selon la revendication 1, **caractérisé en ce que** le moyen de liaison en forme de tige est une vis (20).

3. Support selon la revendication 1 ou 2, **caractérisé en ce que** le trou (24) dans le socle (12) est présent de telle sorte que le moyen de liaison (20) est présent avec son extrémité noyée dans le socle (12).

4. Support selon l'une des revendications précédentes, **caractérisé en ce que** le trou (24) possède un rétrécissement de section (50, 52) élastiquement déformable, de telle sorte que le moyen de liaison (20) dirigé à travers le trou (24) peut être pivoté en va-et-vient entre des positions de crantage formées dans le trou de part et d'autre du rétrécissement (50, 52).

5. Support selon la revendication 4, **caractérisé en ce que** la paroi (46, 48) du corps d'insertion (40) est élastiquement déformable dans la région du rétrécissement de section (50, 52) du trou (24).

6. Support selon la revendication 5, **caractérisé en ce que** la paroi (46, 48) du corps d'insertion (40) est écartable dans la région du rétrécissement de section (50, 52) du trou (24).

7. Support selon la revendication 6, **caractérisé en ce qu'**un espace libre (60, 62) est présent entre le corps d'insertion (40) et le socle (12) dans la région du rétrécissement de section (50, 52) du trou (24).

8. Support selon l'une des revendications précédentes, **caractérisé en ce que** le socle (12) est une pièce en matière plastique rigide en flexion.

9. Support selon l'une des revendications précédentes, **caractérisé en ce que** les corps d'insertion (40), qui peuvent être fixement installés sur le socle (12), sont constitués d'une manière plastique élastiquement déformable.

10. Support selon l'une des revendications précédentes, **caractérisé en ce que** le socle (12) est une pièce moulée par injection de matière plastique.

11. Support selon l'une des revendications précédentes, **caractérisé en ce qu'**un corps d'insertion (40) peut être inséré dans le socle (12) en y étant encastré.

12. Support selon l'une des revendications précédentes, **caractérisé en ce qu'**un corps d'insertion (40) peut être inséré dans le socle (12) en y étant encastré au moins pour partie en engagement de friction.

13. Support selon l'une des revendications précédentes, **caractérisé en ce qu'**au moins une zone de raccordement, avec sa première région de surface et sa deuxième région de surface (32, 34), est partie intégrante du socle (12), d'un seul tenant.

14. Support selon l'une des revendications précédentes, **caractérisé en ce qu'**au moins une zone de raccordement, avec sa première région de surface et sa deuxième région de surface (32, 34), forme un corps de raccordement qui peut être fixé d'une part sur un socle et d'autre part sur un pied d'appui.
